# EUROPÄISCHE PATENTSCHRIFT

(11) **EP 1 868 445 B1**
(45) Veröffentlichungstag und Bekanntmachung des Hinweises auf die Patenterteilung: **15.07.2009**
(21) Anmeldenummer: 06701093.4
(22) Anmeldetag: 01.02.2006
(51) Int. Cl.: A23G 3/20, A23G 1/21

(54) **VERFAHREN ZUR HERSTELLUNG EINES GEFÜLLTEN VERZEHRPRODUKTES**
METHOD FOR PRODUCING A FILLED CONSUMABLE PRODUCT
PROCEDE DE FABRICATION D'UN PRODUIT ALIMENTAIRE FOURRE

(30) Priorität: 13.04.2005 DE 102005017178
(43) Veröffentlichungstag der Anmeldung: 26.12.2007
(73) Patentinhaber: Bühler AG, 9240 Uzwil (CH)
(72) Erfinder: WEBER, Rainer, 51702 Bergneustadt (DE); WALGARTH, Daniel, 53809 Ruppichteroth (DE)
(74) Vertreter: Wilming, Martin
(86) Internationale Anmeldenummer: PCT/CH2006/000065
(87) Internationale Veröffentlichungsnummer: WO 2006/108306

(56) Entgegenhaltungen:
- EP-A- 0 398 657
- EP-A- 0 898 898
- EP-A- 0 948 899
- EP-A- 1 378 173
- NL-A- 6 919 230
- US-A- 4 229 484
- US-A1- 2004 131 751

## Beschreibung

Die Erfindung bezieht sich auf ein Verfahren zur Herstellung eines gefüllten Verzehrgutes, insbesondere eines schalenartigen Verzehrgutes aus mindestens zwei verschiedenen Massen, von denen die erste eine Hülse bzw. Schale des Verzehrgutes und die zweite eine Füllung des Verzehrgutes bildet, wie z.B. Pralinen.

Bei den bekannten "klassischen" Verfahren erfolgen drei aufeinanderfolgende Verfahrensschritte, nämlich Hülsen-Bildung, Hülsen-Befüllung und Deckel-Herstellung, für die jeweils eine Giessmaschine verwendet wird. Dies ermöglicht zwar die Herstellung geometrisch komplizierter Produktformen sowie die Verwendung von Massen mit stark unterschiedlichen Eigenschaften, wie z.B. grossen Viskositätsunterschieden, für die Hülsenmasse, die Füllungsmasse und die Deckelmasse. Nachteilig ist bei solchen Verfahren jedoch, dass mindestens drei Giessschritte benötigt werden und auch in den weiteren Verfahrensschritten ein relativ hoher Aufwand betrieben werden muss.

Um den Anlagen- und Verfahrensaufwand für die Herstellung von Pralinen zu verringern, wurde ein Verfahren entwickelt, bei dem die Hülsen-Bildung, die Hülsen-Befüllung und die Deckel-Herstellung in einem einzigen Verfahrensschritt bzw. mit nur einem einzigen "Schuss" erfolgen. Bei diesem sog. One-Shot-Verfahren wird durch eine einzige Düse, die ein zentrales Röhrchen und einen das zentrale Röhrchen umgebenden Kanal aufweist, die Schokolade für die Hülse über den Kanal und die Füllung über das Röhrchen mittels eines Schusses in eine Form eingebracht. Dadurch entsteht eine Praline, bei der die Füllung von der Schokolade vollständig umgeben ist. Dadurch ist zwar die Herstellung eines kompletten Produktes mit nur einem Giessschritt möglich, doch eignet sich dieses Verfahren nur für die Verarbeitung von Massen mit ähnlichen Viskositäten, und sind nur relativ einfache geometrische Produktformen mit relativ ungleichmässigen Hülsenwandstärken herstellbar. Solche und ähnliche Verfahren sind z.B. aus der DE 197 32 593 oder aus der FR 11 32 821 bekannt.

Der Erfindung liegt die Aufgabe zugrunde, ein Verfahren zur Herstellung eines gefüllten Verzehrgutes der eingangs beschriebenen Art bereitzustellen, das bei vertretbarem Aufwand dennoch die Herstellung geometrisch komplizierter Produktformen mit exakter und gleichmässiger Wanddickenausbildung ermöglicht.

Diese Aufgabe wird gemäss Anspruch 1 durch ein Verfahren zur Herstellung eines gefüllten Verzehrgutes gelöst, wobei das Verfahren die folgenden Schritte aufweist:
a) Herstellen einer Hülse, die eine Hülsenöffnung aufweist;
b) Eindosieren einer Füllung über die Hülsenöffnung in die Hülse; und
c) Auftragen eines Deckels oder einer Schutzschicht auf die Hülsenöffnung, um die gefüllte Hülse zu schliessen.

Erfindungsgemäss erfolgen das Eindosieren der Füllung gemäss Schritt b) und das Auftragen des Deckels oder der Schutzschicht gemäss Schritt c) gleichzeitig in einem einzigen Verfahrensschritt.

Somit werden lediglich zwei Giessmaschinen benötigt, nämlich eine erste Giessmaschine für das Herstellen der Hülsen gemäss Schritt a) und eine zweite Giessmaschine für das gleichzeitig erfolgende Eindosieren der Füllung in die Hülsen und das Auftragen des Deckels bzw. der Schutzschicht zum Verschliessen der gefüllten Hülsen. Im Schritt c) kann auch eine sehr dünne Schutzschicht aufgetragen werden, die z.B. aus einer hochauffettenden Schokolade besteht, die ein "Sprühverfahren" ersetzt, um ein nachträgliches "Deckeln" mit einer zusätzlichen Maschine zu ermöglichen. Auch in diesem Fall wird eine Maschine (Sprühmaschine) eingespart.

Ausserdem kann die Masse für die Hülsenherstellung von den beiden Massen für die Füllung und den Deckel unterschiedliche Eigenschaften, insbesondere eine andere Viskosität bei den verfahrensgemässen Verarbeitungstemperaturen aufweisen, wodurch eine grössere Vielfalt von Massen-Kombinationen und somit eine grössere Produktvielfalt als beim eingangs geschilderten One-Shot-Verfahren ermöglicht wird.

Vorzugsweise erfolgt das Herstellen der Hülse gemäss Schritt a) durch Kaltstempeln. Beim Kaltstempel-Verfahren wird zunächst geschmolzene Fettmasse in eine Hohlform bzw. Alveole eindosiert, so dass diese zu einem Teil mit der geschmolzenen Masse gefüllt wird. In der Regel wird die teilgefüllte Hohlform kurz vibriert, um eventuelle Gaseinschlüsse auszutreiben und/oder die geschmolzene Masse zu verteilen. Dann wird ein Kühlkörper bzw. Kühlstempel gegen die teilgefüllte Hohlform abgesenkt, wobei der Kühlkörper in die mit der geschmolzenen Masse teilgefüllte Hohlform eindringt und die geschmolzene Masse verdrängt, die sich dann in dem Hohlraum zwischen der Aussenfläche des Kühlkörpers und der Innenfläche der Hohlform verteilt. Der stempelartige Kühlkörper verbleibt dann während einer kurzen Verweilzeit in dieser abgesenkten Stellung, bis die in dem Hohlraum verteilte Masse erstarrt ist. Anschliessend wird der Kühlkörper wieder angehoben. Die fertig geformte Hülse aus der erstarrten Masse kann dann aus der Hohlform für die weitere Verarbeitung entnommen werden, wird jedoch vorzugsweise in dieser belassen, um sie dem anschliessenden Eindosieren der Füllung gemäss Schritt b) und dem gleichzeitigen Auftragen des Deckels gemäss Schritt c) zuzuführen.

Das Kaltstempeln ermöglicht die Herstellung geometrisch komplexer Hülsenformen, die z.B. beim One-Shot-Verfahren nicht möglich sind. Für das Kaltstempeln verwendet man eine erste Giessmaschine.

Vorzugsweise wird die Füllungsmasse über eine erste Düse in die Hülse eindosiert, und die Deckelmasse wird über eine zweite Düse dosiert auf die Füllungsmasse gegossen. Für das Füllen und Deckeln verwendet man eine zweite Giessmaschine. Die Düsengeometrien sind denen der OneShot-Düsen ähnlich oder identisch.

Zur Durchführung des erfindungsgemässen Verfahrens wird eine Anlage verwendet, die aufweist:
➢ Mittel zum Herstellen einer Hülse mit einer Hülsenöffnung;
➢ Mittel zum Eindosieren der Füllung über die Hülsenöffnung in die Hülse;
➢ Mittel zum Auftragen eines Deckels auf die Hülsenöffnung, um die gefüllte Hülse zu schliessen.

Erfindungsgemäss ist das Mittel zum Eindosieren der Füllung und das Mittel zum Auftragen des Deckels gemeinsam und mit konstantem Abstand zueinander bewegbar.

Vorzugsweise ist das Mittel zum Herstellen der Hülse eine Kaltstempelvorrichtung mit einer ersten Giessmaschine.

Eine solche Kaltstempel-Vorrichtung enthält eine mit Fettmasse im fliessfähigen temperierten Zustand befüllbare Hohlform. Die Innenfläche der Hohlform bestimmt dabei die Aussenfläche der herzustellenden Hülse. Ausserdem enthält die Vorrichtung einen stempelartigen Kühlkörper, der in die Hohlform absenkbar ist. Die Aussenfläche des Kühlkörpers bestimmt dabei die Innenfläche der herzustellenden Hülse.

Vorzugsweise ist das Mittel zum Eindosieren der Füllung eine erste Düse und das Mittel zum Auftragen des Deckels eine zweite Düse, die Bestandteil einer zweiten Giessmaschine sind.

Die beiden Düsen können dicht nebeneinander oder konzentrisch zueinander angeordnet sein. Bevorzugte Ausführungen verwenden eine Düsenanordnung, die ein zentrales Röhrchen und einen das Röhrchen umgebenden Kanal mit ringförmigem oder polygonförmigen Querschnitt aufweist.

Die konzentrische Anordnung oder Nebeneinander-Anordnung eignet sich für die Herstellung "punktartiger" gefüllter Verzehrgüter, wie z.B. Pralinen mit rundem, quadratischem oder anderweitig regelmässig mehreckigem Grundriss durch Punktgiessen innerhalb der Hülse bzw. in die Hülse hinein.

Die beiden Anordnungen eignen sich auch für die Herstellung "linienartiger" gefüllter Verzehrgüter, wie z.B. Schokoriegel mit rechteckförmigem Grundriss durch Bandgiessen innerhalb der Hülse bzw. in die Hülse hinein.

Die Erfindung ermöglicht somit das Herstellen einer grossen Vielfalt gefüllter Verzehrprodukte, bestehend aus einer Hülse, einer Füllung und einem Deckel.

Die Hülse kann aus einer Fettmasse, insbesondere Schokolade bestehen. Sie kann aber auch eine Backware sein, wie z.B. eine Waffelschale. Sowohl runde, z.B. pralinenartige Hülsen als auch längliche riegelartige Hülsen können mit dem erfindungsgemässen Verfahren hergestellt werden.

Die Düsenanordnung kann konzentrisch sein, wie weiter oben beschrieben. Alternativ kann auch eine exzentrische Düsenanordnung verwendet werden, bei der das Röhrchen nicht im Zentrum des Querschnitts oder im umgebenden Kanal angeordnet ist, sondern exzentrisch, d.h. vom Mittelpunkt des Querschnitts entfernt. Vorzugsweise ist der Querschnitt des Kanals dann elliptisch oder länglich polygonförmig

## Patentansprüche

1. Verfahren zur Herstellung eines gefüllten Verzehrgutes, insbesondere eines schalenartigen Verzehrgutes aus mindestens zwei verschiedenen Massen, von denen die erste eine Hülse bzw. Schale des Verzehrgutes und die zweite eine Füllung des Verzehrgutes bildet, wobei das Verfahren die folgenden Schritte aufweist:
a) Herstellen einer Hülse, die eine Hülsenöffnung aufweist;
b) Eindosieren einer Füllung über die Hülsenöffnung in die Hülse; und
c) Auftragen eines Deckels oder einer Schutzschicht auf die Hülsenöffnung, um die gefüllte Hülse zu schliessen,
**dadurch gekennzeichnet, dass** das Eindosieren der Füllung gemäss Schritt b) und das Auftragen des Deckels gemäss Schritt c) gleichzeitig in einem einzigen Verfahrensschritt erfolgen.

2. Verfahren nach Anspruch 1, **dadurch gekennzeichnet, dass** das Herstellen der Hülse gemäss Schritt a) durch Kaltstempeln erfolgt.

3. Verfahren nach Anspruch 1 oder 2, **dadurch gekennzeichnet, dass** die Füllungsmasse über eine erste Düse in die Hülse eindosiert wird und die Deckelmasse über eine zweite Düse dosiert auf die Füllungsmasse gegossen wird.

4. Verfahren nach Anspruch 1 oder 2, **dadurch gekennzeichnet, dass** die Füllungsmasse und die Deckelmasse über eine Düsenanordnung eindosiert bzw. aufgetragen werden, die ein Röhrchen mit einem das Röhrchen umgebenden Kanal aufweist, wobei die Füllungsmasse über das Röhrchen und die Deckelmasse über den Kanal an den Dosierungsort geführt werden.

5. Anlage zur Herstellung eines gefüllten Verzehrgutes, insbesondere eines schalenartigen Verzehrgutes aus mindestens zwei verschiedenen Massen, von denen die erste eine Hülse bzw. Schale des Verzehrgutes und die zweite eine Füllung des Verzehrgutes bildet, wobei die Anlage aufweist:
➢ Mittel zum Herstellen einer Hülse mit einer Hülsenöffnung;
➢ Mittel zum Eindosieren der Füllung über die Hülsenöffnung in die Hülse;
➢ Mittel zum Auftragen eines Deckels auf die Hülsenöffnung, um die gefüllte Hülse zu schliessen,
**dadurch gekennzeichnet, dass** das Mittel zum Eindosieren der Füllung und das Mittel zum Auftragen des Deckels gemeinsam und mit konstantem Abstand zueinander bewegbar sind.

6. Anlage nach Anspruch 5, **dadurch gekennzeichnet, dass** das Mittel zum Herstellen der Hülse eine Kaltstempelvorrichtung ist.

7. Anlage nach Anspruch 5 oder 6, **dadurch gekennzeichnet, dass** das Mittel zum Eindosieren der Füllung eine erste Düse ist und das Mittel zum Auftragen des Deckels eine zweite Düse ist.

8. Anlage nach Anspruch 5 oder 6, **dadurch gekennzeichnet, dass** das Mittel zum Eindosieren bzw. Auftragen eine Düsenanordnung ist, die ein Röhrchen mit einem das Röhrchen umgebenden Kanal aufweist.

9. Anlage nach Anspruch 8, **dadurch gekennzeichnet, dass** das Röhrchen zentral in dem Kanal angeordnet ist, wobei der Kanal einen kreisförmigen oder polygonförmigen Querschnitt hat.

## Claims

1. A method for manufacturing a filled consumable, in particular a husk-like consumable consisting of at least two different compounds, the first of which forms a sleeve or husk of the consumable, and the second of which forms a filling of the consumable, wherein the method involves the following steps:
a) Manufacturing a sleeve that exhibits a sleeve opening;
b) Metering a filling into the sleeve via the sleeve opening; and
c) Fitting a cover or protective layer on the sleeve opening to seal the filled sleeve;
**characterized in that** the filling is metered according to step b) and the cover is fitted according to step c) simultaneously in a single procedural step.

2. The method according to claim 1, **characterized in that** the sleeve is manufactured according to step a) via cold stamping.

3. The method according to claim 1 or 2, **characterized in that** the filling compound is metered into the sleeve via a first die, and the cover compound is cast onto the filling compound metered via a second die.

4. The method according to claim 1 or 2, **characterized in that** the filling compound and cover compound are metered in or applied via a die arrangement that exhibits a tube with a channel enveloping the tube, wherein the tube carries the filling compound to the metering location, while the channel carries the cover compound.

5. A device for manufacturing a filled consumable, in particular a husk-like consumable consisting of at least two different compounds, the first of which forms a sleeve or husk of the consumable, and the second of which forms a filling of the consumable, wherein the device exhibits:
- Means for manufacturing a sleeve with a sleeve opening;
- Means for metering the filling into the sleeve via the sleeve opening;
- Means for fitting a cover on the sleeve opening to seal the filled sleeve;
**characterized in that** the means for metering in the filling and the means for fitting the cover can be moved at the same time and spaced a constant distance apart from each other.

6. The device according to claim 5, **characterized in that** the means for manufacturing the sleeve is a cold stamping device.

7. The device according to claim 5 or 6, **characterized in that** the means for metering in the filling is a first die, and the means for applying the cover is a second die.

8. The device according to claim 5 or 6, **characterized in that** the metering or application means is a die arrangement that exhibits a tube with a channel enveloping the tube.

9. The device according to claim 8, **characterized in that** the tube is centrally arranged in the channel, wherein the channel has a circular or polygonal cross section.

## Revendications

1. Procédé de fabrication d'un produit alimentaire fourré, notamment d'un produit alimentaire en forme de coquille à partir d'au moins deux masses différentes, desquelles la première forme une gaine, respectivement une coquille du produit alimentaire et la deuxième forme un fourrage du produit alimentaire, dans lequel le procédé présente les étapes suivantes :
a) fabrication d'une gaine, qui présente une ouverture de gaine ;
b) dosage d'un fourrage à l'intérieur de la gaine à travers l'ouverture de gaine dans la gaine ; et
c) application d'un couvercle ou d'une couche de protection sur l'ouverture de gaine, afin de fermer la gaine fourrée,
**caractérisé en ce que** le dosage du fourrage s'effectue selon l'étape b) et l'application du couvercle selon l'étape c) simultanément dans une étape de procédé unique.

2. Procédé selon la revendication 1, **caractérisé en ce que** la fabrication de la gaine s'effectue selon l'étape a) par poinçonnage à froid.

3. Procédé selon la revendication 1 ou 2, **caractérisé en ce que** la masse de fourrage est dosée dans la gaine via une première buse et la masse de couvercle est coulée sur la masse de fourrage de manière dosée via une deuxième buse.

4. Procédé selon la revendication 1 ou 2, **caractérisé en ce que** la masse de remplissage et là masse de couvercle sont dosées, respectivement appliquées via un dispositif de buse, qui présente un mini-tube avec un canal entourant le mini-tube, dans lequel la masse de remplissage est guidée via le mini-tube et la masse de couvercle est guidée via le canal sur l'emplacement de dosage.

5. Installation de fabrication d'un produit alimentaire fourré, notamment d'un produit alimentaire en forme de coquille à partir d'au moins deux masses différentes, desquelles la première forme une gaine, respectivement une coquille du produit alimentaire et la deuxième forme un fourrage du produit alimentaire, dans lequel l'installation présente :
- des moyens de fabrication d'une gaine avec une ouverture de gaine ;
- de moyens de dosage du fourrage à travers l'ouverture de gaine dans la gaine ;
- des moyens d'application d'un couvercle sur l'ouverture de gaine, afin de fermer la gaine fourrée,
**caractérisé en ce que** les moyens de dosage du fourrage et les moyens d'application du couvercle peuvent être déplacés en commun et à distance constante les uns par rapport aux autres.

6. Installation selon la revendication 5, **caractérisée en ce que** les moyens de fabrication de la gaine sont un dispositif de poinçonnage à froid.

7. Installation selon la revendication 5 ou 6, **caractérisé en ce que** les moyens de dosage du fourrage sont une première buse et les moyens d'application du couvercle sont une deuxième buse.

8. Installation selon la revendication 5 ou 6, **caractérisée en ce que** les moyens de dosage, respectivement d'application sont un dispositif de buse, qui présente un mini-tube avec un canal entourant le mini-tube.

9. Installation selon a revendication 8, **caractérisée en ce que** le mini-tube est disposé au centre dans le canal, dans lequel le canal a une section transversale de forme circulaire ou polygonale.
